Europäisches Patentamt

European Patent Office

Office européen des brevets

(11) Numéro de publication: **0 429 368 A1**

## (12) DEMANDE DE BREVET EUROPEEN

(21) Numéro de dépôt: 90403306.5

(51) Int. Cl.⁵: **B23K 26/06, G02B 27/00**

(22) Date de dépôt: **22.11.90**

(30) Priorité: **23.11.89 FR 8915422**

(43) Date de publication de la demande:
**29.05.91 Bulletin 91/22**

(84) Etats contractants désignés:
**BE CH DE FR GB IT LI**

(71) Demandeur: **COMMISSARIAT A L'ENERGIE ATOMIQUE**
**31-33, rue de la Fédération**
**F-75015 Paris(FR)**

(72) Inventeur: **Meunier, Gilles**
**113 Avenue du Drapeau**
**F-21100 Dijon(FR)**

(74) Mandataire: **Mongrédien, André et al**
**c/o BREVATOME 25, rue de Ponthieu**
**F-75008 Paris(FR)**

(54) Dispositif de focalisation d'un faisceau lumineux permettant d'obtenir une tache focale de forme allongée.

(57) Il comprend des premiers moyens optiques (38, 40) qui sont aptes, d'une part, à déformer un faisceau lumineux incident, dont l'enveloppe est sensiblement cylindrique de révolution, de telle façon que le faisceau déformé ait, dans un plan qui lui est perpendiculaire, une section transversale allongée suivant une direction, et, d'autre part, à faire varier la forme de l'enveloppe du faisceau déformé, et des deuxièmes moyens optiques (42) qui suivent les premiers moyens optiques (38, 40) et qui sont aptes à focaliser le faisceau lumineux déformé par ceux-ci tout en réalisant une homothétie de ce faisceau déformé, la tache focale obtenue par l'intermédiaire des deuxièmes moyens optiques (42) étant ainsi homothétique de la section transversale de l'enveloppe du faisceau déformé tombant sur les deuxièmes moyens optiques.

Application au soudage de pièces mécaniques.

FIG. 7

# DISPOSITIF DE FOCALISATION D'UN FAISCEAU LUMINEUX PERMETTANT D'OBTENIR UNE TACHE FOCALE DE FORME ALLONGEE

La présente invention concerne un dispositif de focalisation d'un faisceau lumineux. Elle s'applique notamment au soudage de pièces mécaniques au moyen de lasers de puissance, par exemple de type YAG, à fréquence de tir élevée, celle-ci pouvant être supérieure à 10 HZ, voire même à émission continue.

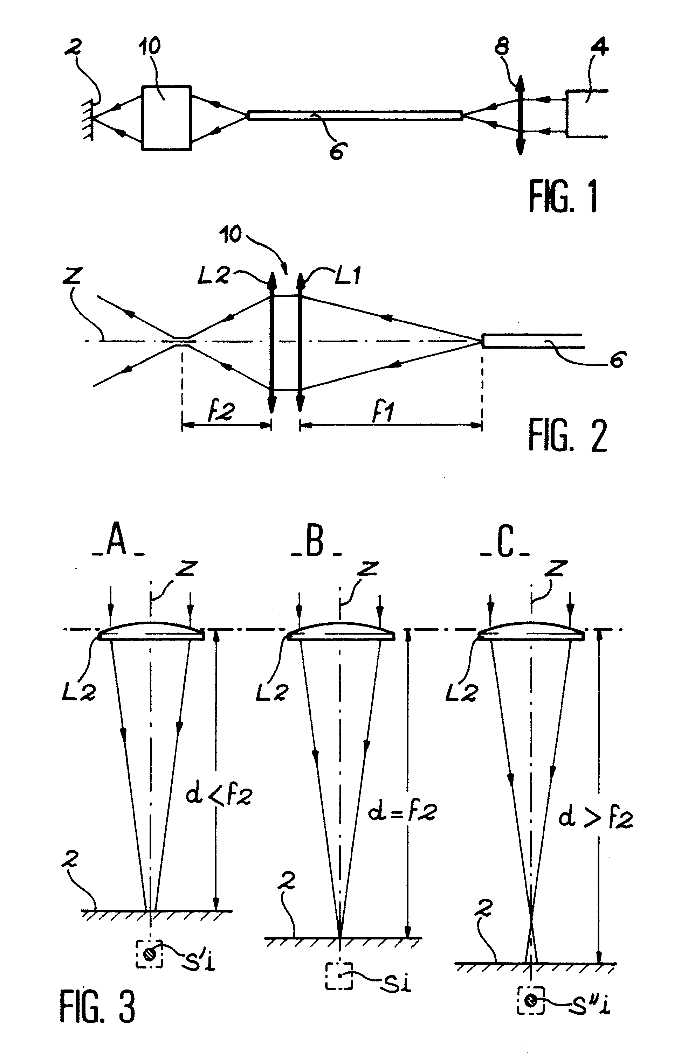

On connaît déjà un dispositif de focalisation d'un faisceau lumineux, faisant partie d'un système de transport d'énergie lumineuse qui est schématiquement représenté sur la figure 1.

Ce système, qui est par exemple destiné au traitement (soudage, découpage, marquage, traitement de surface ou encore brasage, par exemple) d'une pièce mécanique 2, comprend :
- un laser de puissance 4,
- une fibre optique 6,
- des moyens optiques de focalisation 8, qui comportent une ou plusieurs lentilles et sont prévus pour focaliser la lumière émise par le laser 4 sur une extrémité de la fibre 6, et
- le dispositif de focalisation 10, qui est prévu pour recevoir la lumière transmise par la fibre 6 et pour focaliser cette lumière sur la pièce 2.

Le laser de puissance 4 est par exemple un laser YAG pulsé.

La fibre optique 6 est par exemple de type silice-silice à saut d'indice et le diamètre du coeur de cette fibre est par exemple égal à 600 micromètres, 800 micromètres ou 1000 micromètres.

Le dispositif connu 10 a pour fonction de recréer, sur la pièce à traiter 2, l'image d'un point-source, à savoir l'image du coeur de la fibre optique 6 en la face de sortie de celle-ci, la surface du coeur en cette face de sortie étant alors considérée comme surface émettrice.

Le dispositif connu 10 est conçu pour obtenir, au point-image, une densité surfacique d'énergie suffisante pour atteindre les températures nécessaires au traitement souhaité.

On caractérise donc, en première approximation, le dispositif connu de focalisation en bout de fibre optique par sa capacité à réaliser une homothétie de rapport k du point-image par rapport au point-source.

Ce dispositif connu 10, notamment utilisé dans le domaine du soudage, est schématiquement représenté sur la figure 2 et comprend deux lentilles convergentes classiques L1 et L2 dont les distances focales sont respectivement notées f1 et f2.

La face de sortie de la fibre optique 6 est placée sur l'axe optique Z commun aux deux lentilles L1 et L2, à la distance f1 de L1, de sorte que le faisceau lumineux divergent issu de cette face de sortie est transformé, par la lentille L1, en un faisceau lumineux dont l'enveloppe a sensiblement la forme d'un cylindre de révolution d'axe Z.

Ce faisceau est focalisé par la lentille L2. La tache focale qui en résulte est à la distance f2 de L2.

Le point-source (section transversale du coeur de la fibre optique par le plan-objet du dispositif de focalisation 10) a un diamètre Ds et une surface (surface-source) Ss. De même, dans le plan-image du dispositif de focalisation 10, la tache focale obtenue (point-image) a un diamètre Di et une surface Si.

Le rapport Di/Ds est égal au rapport f2/f1 qui est précisément le rapport d'homothétie k.

On en déduit que le rapport Si/Ss (qui vaut $Di^2/Ds^2$) est égal à $k^2$.

La densité surfacique d'énergie DE au point-image, que l'on peut exprimer en $J/cm^2$, est égale à E/Si, l'énergie E d'une impulsion lumineuse parvenant au point-image étant exprimée en joules et la surface Si étant exprimée en $cm^2$.

On peut donc écrire :

$$DE = E/(k^2.Ss)$$

La densité surfacique d'énergie évolue donc de manière inversement proportionnelle au carré du rapport d'homothétie k.

Certaines variantes connues du dispositif de focalisation schématiquement représenté sur la figure 2 peuvent comprendre des expanseurs de faisceau, à quatre lentilles, qui sont spécifiques aux utilisations du dispositif dans le domaine du soudage ou peuvent comprendre des ensembles de sept lentilles, prévus pour limiter les aberrations sphériques. D'une manière générale, ces variantes visent à optimiser la qualité du point-image.

Avec un laser de puissance, par exemple un laser YAG pulsé, et en choisissant convenablement le rapport k, on arrive, dès les plus basses énergies, à créer au point-image les températures de fusion recherchées dans le domaine du soudage, voire même les températures de vaporisation de la pièce à souder.

En pratique, une fibre optique dont le coeur à un diamètre égal à 545 micromètres et qui est associée à un dispositif de focalisation de rapport k égal à 0,83, permet d'atteindre des températures de vaporisation dès que l'on dépasse une énergie E de l'ordre de 7 joules.

Ces températures, qui sont utiles pour des opérations de découpage, sont gênantes pour le soudage. En effet, on met alors en oeuvre des cycles thermodynamiques générateurs de projections de matière en fusion, projections qui sont incompatibles avec la notion de soudure saine que l'on recherche.

Il est alors nécessaire de trouver un réglage du dispositif de focalisation, permettant d'obtenir les températures qui conduisent aux objectifs de pénétration que l'on se fixe tout en garantissant l'obtention d'une soudure saine.

Les utilisateurs de lasers pulsés ont alors recours à une sous-focalisation ou à une sur-focalisation, ce qui est schématiquement illustré par la figure 3.

Sur cette figure 3, on voit qu'en réglant la distance d séparant la lentille de focalisation L2 de la pièce à souder 2, on fait varier directement la surface-image sur la pièce 2 (surface du faisceau sur cette pièce 2).

La maîtrise de cette distance d, que l'on appelle la distance de tir, est donc un moyen efficace pour moduler la densité surfacique d'énergie déposée sur la pièce 2.

Dans le cas d'une sous-focalisation (figure 3-A), d est inférieur à f2 et la surface-image est notée $S'i$ ; dans le cas d'une focalisation (figure 3-B), d est égal à f2 et la surface-image est notée Si, $S'i$ étant supérieur à Si ; enfin, dans le cas d'une sur-focalisation (figure 3-C), d est supérieur à f2 et la surface-image est notée $S''i$, $S''i$ étant également supérieur à Si.

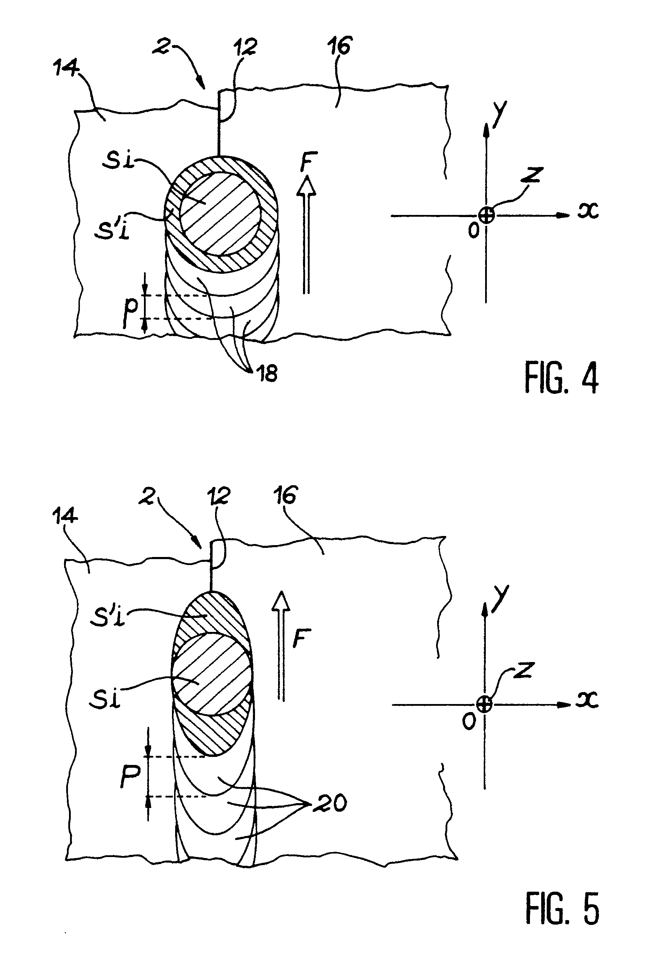

La figure 4 illustre schématiquement le principe de réalisation d'un cordon de soudure sur la pièce 2, au moyen d'un laser de puissance pulsé. Sur la figure 4, on voit un plan de joint 12 qui sépare deux éléments 14 et 16 de la pièce 2 que l'on veut souder l'un à l'autre. Le sens de progression de la soudure est représenté par une flèche F qui est parallèle au plan de joint 12. Les points de soudure 18 sont juxtaposés avec un pas d'avance p adéquat pour garantir la continuité du cordon de soudure pour une pénétration donnée.

On suppose qu'on a recours à une sous-focalisation du faisceau sur la pièce 2, ce qui est le cas le plus fréquent. On travaille donc avec une image dont la surface $S'i$ est supérieure à Si.

En considérant le repère x0y dont l'axe y est parallèle au plan de joint 12 et perpendiculaire à l'axe Z et dont l'axe x est perpendiculaire à Z et à y et coupe cet axe y en 0, on remarque :
- que l'augmentation, selon l'axe y, du diamètre du faisceau sur la pièce 2 est utile étant donné que cette augmentation (due à la sous-focalisation) permet de souder, à chaque impact, un plus long segment de plan de joint, et
- que l'augmentation, selon l'axe x, du diamètre du faisceau lumineux sur la pièce 2, augmentation qui résulte également de la sous-focalisation, est inutile et même nocive puisqu'elle implique une déformation plus importante de la pièce.

La présente invention a pour objet un dispositif de focalisation d'un faisceau lumineux qui permet de diminuer le nombre de points de soudure, et donc le temps de soudage, par rapport au dispositif connu de focalisation mentionné plus haut, pour une même longueur de plan de joint de soudure, et qui, plus généralement, permet de diminuer le temps de traitement d'une pièce et aussi de se passer de sur- ou de sous-focalisation pour ce traitement.

A cet effet, la présente invention utilise, en plus de moyens de focalisation, des moyens optiques conduisant à une élongation du faisceau lumineux avant la focalisation de celui-ci.

De façon précise, la présente invention a pour objet un dispositif de focalisation d'un faisceau lumineux, caractérisé en ce qu'il comprend des premiers moyens optiques qui sont aptes, d'une part, à déformer un faisceau lumineux incident, dont l'enveloppe est sensiblement cylindrique de révolution, de telle façon que le faisceau déformé ait, dans un plan qui lui est perpendiculaire, une section transversale allongée suivant une direction, et, d'autre part, à faire varier la forme de l'enveloppe du faisceau déformé, et des deuxièmes moyens optiques qui suivent les premiers moyens optiques et qui sont aptes à focaliser le faisceau lumineux déformé par ceux-ci tout en réalisant une homothétie de ce faisceau déformé, la tache focale obtenue par l'intermédiaire des deuxièmes moyens optiques étant ainsi homothétique de la section transversale de l'enveloppe du faisceau déformé tombant sur les deuxièmes moyens optiques.

La présente invention permet donc d'obtenir un point-image de forme allongée et non plus circulaire.

Comme on le comprendra mieux par la suite, dans le cas d'une application au soudage, la présente invention permet, à densités surfaciques d'énergie DE égales, d'augmenter la longueur des segments de plan de joint que l'on soude (longueur comptée suivant l'axe y), tout en maintenant la largeur du cordon de soudure (comptée suivant l'axe x) égale à la valeur du diamètre de la surface Si, ce qui minimise les déformations de la pièce que l'on soude.

Dans la présente invention, on peut utiliser des premiers moyens optiques qui sont aptes à déformer le faisceau lumineux incident de telle façon que le faisceau déformé ait, dans un plan qui lui est perpendiculaire, une section transversale sensiblement elliptique.

Le point-image est alors sensiblement elliptique.

Selon un mode de réalisation particulier du dispositif objet de l'invention, les premiers moyens optiques comprennent :
- une lentille cylindrique plan-concave qui est prévue pour allonger le faisceau lumineux incident suivant une direction perpendiculaire aux génératrices de cette lentille cylindrique plan-concave, et
- une lentille cylindrique plan-convexe dont les génératrices sont parallèles aux génératrices de la lentille cylindrique plan-concave, qui est placée entre cette dernière et les deuxièmes moyens optiques de façon que les deux lentilles aient un foyer commun, et qui est prévue pour transformer le faisceau lumineux qui lui parvient en un faisceau dont les rayons lumineux sont sensiblement parallèles,
et le dispositif comprend en outre des moyens aptes à faire varier la distance de la lentille cylindrique plan-convexe à la lentille cylindrique plan-concave.

Dans le cas d'une application au soudage, ceci permet, par réduction de cette distance, d'augmenter encore plus la longueur des segments de plan de joint que l'on soude.

Le dispositif objet de l'invention peut comprendre en outre des troisièmes moyens optiques qui précédent les premiers moyens optiques et qui sont aptes à former le faisceau lumineux dont l'enveloppe est sensiblement cylindrique de révolution, à partir d'un faisceau lumineux incident, divergent.

On peut utiliser un guide de lumière pour transporter le faisceau lumineux que l'on veut focaliser : le dispositif objet de la présente invention peut comprendre en outre un tel guide de lumière dont une extrémité est placée en regard des troisièmes moyens optiques et prévue pour envoyer un faisceau lumineux divergent vers ces troisièmes moyens optiques lorsqu'un faisceau lumineux est injecté dans l'autre extrémité du guide de lumière.

L'utilisation d'un tel guide de lumière a, entre autres, l'avantage d'augmenter fortement la maniabilité du dispositif, notamment dans le domaine du soudage, puisqu'il permet d'isoler la source lumineuse nécessaire au soudage de l'endroit d'où celui-ci doit être effectué et, en outre, d'utiliser une même source de lumière pour plusieurs dispositif, chacun de ceux-ci étant alors relié à la source par un guide de lumière.

Le dispositif objet de l'invention peut comprendre en outre des moyens de réglage de la position de l'extrémité du guide de lumière par rapport aux troisièmes moyens optiques, afin d'optimiser le fonctionnement du dispositif.

Il est également préférable de prévoir des moyens de réglage angulaire de l'ensemble formé par cette extrémité du guide de lumière et les troisièmes moyens optiques par rapport aux premiers moyens optiques, au cas où le faisceau lumineux issu du guide de lumière ne se propagerait pas suivant l'axe optique de ces premiers moyens optiques, par exemple à cause d'un défaut de la face de sortie du guide de lumière.

Enfin, le faisceau lumineux injecté dans l'autre extrémité du guide de lumière peut être un faisceau issu d'un laser de puissance, notamment dans le cas d'une application de la présente invention au le cas d'une application de la présente invention au soudage. Ce laser de puissance peut avoir une fréquence de tir élévée, celle-ci pouvant être supérieur à 10 HZ, ou être un laser de puissance à émission continue.

La présente invention sera mieux comprise à la lecture de la description d'exemples de réalisation donnés ci-après à titre purement indicatif et nullement limitatif, en référence aux dessins annexés sur lesquels :
- la figure 1 est une vue schématique d'un système connu de transport d'énergie lumineuse et a déjà été décrite,
- la figure 2 est une vue schématique d'un dispositif connu de focalisation d'un faisceau lumineux, ce dispositif faisant partie du système représenté sur la figure 1, et a déjà été décrite,
- la figure 3 illustre schématiquement une sous-focalisation, une focalisation et une sur-focalisation d'un faisceau lumineux sur une pièce et a déjà été décrite,
- la figure 4 illustre schématiquement la réalisation d'un cordon de soudure au moyen d'un faisceau laser de puissance sous-focalisé, issu d'un dispositif connu de focalisation, et a déjà été décrite,
- la figure 5 illustre schématiquement la réalisation d'un cordon de soudure au moyen d'un faisceau laser de puissance issu d'un dispositif conforme à l'invention,
- la figure 6 est une vue schématique d'un mode de réalisation particulier du dispositif objet de l'invention,
- la figure 7 illustre schématiquement la configuration du faisceau lumineux qui est focalisé par le dispositif représenté sur la figure 6,
- la figure 8 illustre schématiquement la configuration de ce faisceau lumineux lorsque l'on décale des moyens optiques que comporte le dispositif de la figure 6,
- la figure 9 illustre schématiquement un faisceau lumineux focalisé, et
- la figure 10 illustre schématiquement la rotation apparente d'un faisceau lumineux elliptique obtenu par un dispositif conforme à l'invention, entre sa sortie de ce dispositif et le point de focalisation.

La figure 5 illustre schématiquement la réalisation d'un cordon de soudure à l'aide d'un laser de puissance pulsé et d'un dispositif conforme à l'invention, ce dispositif permettant d'obtenir un point-image elliptique sur la pièce 2.

On voit, sur la figure 5, des points de soudure juxtaposés 20 de forme elliptique.

On utilise ici une focalisation (c'est-à-dire qu'on travaille au point de focalisation), contrairement au cas de la figure 4, et l'on travaille avec des impulsions lumineuses d'énergie E et une surface S'i équivalente à la surface S'i dont il a été question dans la description de la figure 4, c'est-à-dire qu'on travaille avec la même densité surfacique d'énergie DE. De plus, on voit que la surface S'i de la figure 5 est délimitée par une ellipse dont le grand axe est parallèle à l'axe y et dont le petit axe est égal au diamètre du cercle qui délimite la surface Si mentionnée plus haut (plus petit diamètre que l'on puisse obtenir avec la lentille de focalisation).

La forme elliptique du point-image permet :
- selon l'axe y la soudure d'un segment de plan de joint encore plus long que dans la configuration représentée sur la figure 4, le pas d'avance P obtenu dans le cas de la figure 5 étant supérieur à p, et
- selon l'axe x, le maintien de la largeur du cordon de soudure à la valeur du diamètre du cercle qui délimite la surface Si, ce qui limite les déformations de la pièce soudée.

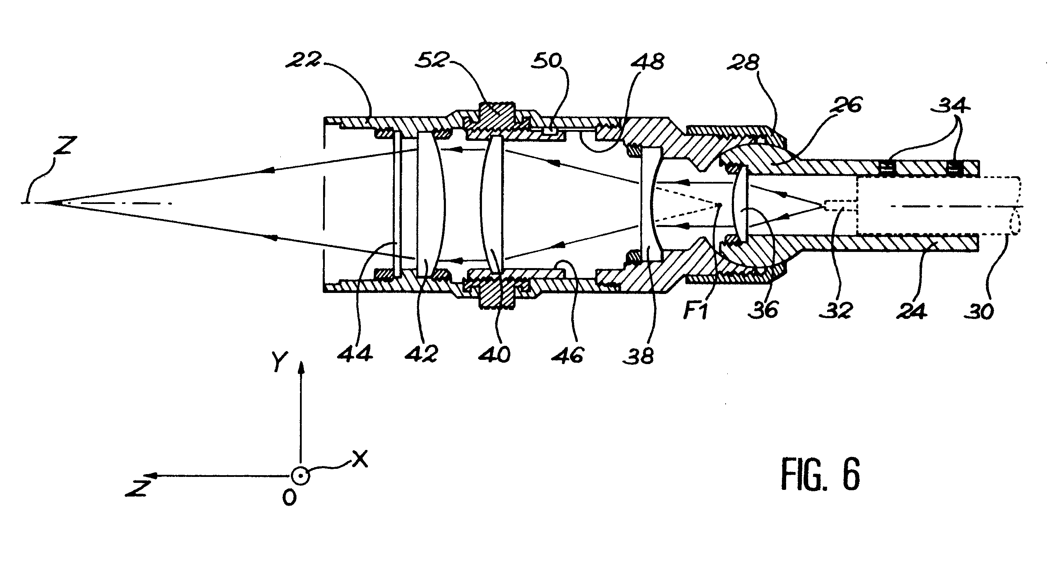

Sur la figure 6, on a représenté schématiquement un dispositif conforme à l'invention. Ce dispositif comprend un corps creux 22 de forme allongée, ouvert en ses deux extrémités, ainsi qu'un manchon 24 dont une extrémité comporte une rotule 26 percée suivant l'axe du manchon. Cette rotule 26 est articulée dans une extrémité du corps 22 et maintenue en place grâce à un écrou 28.

Un connecteur optique 30, portant une fibre optique 32, est mobile en translation dans le manchon 24, suivant l'axe de ce manchon. Des vis 34 permettent d'immobiliser le connecteur par rapport au manchon 24.

On voit sur la figure 6 une extrémité de la fibre optique 32, qui s'étend suivant l'axe du manchon 24, dépasse du connecteur 30 et se trouve en regard de l'extrémité du corps 22 dans laquelle est articulée la rotule 26.

Au niveau de cette rotule 26, une lentille convergente classique 36, de type plan-convexe, est montée dans le manchon, l'axe optique de cette lentille 36 étant confondu avec l'axe du manchon.

Cette lentille 36 est prévue pour transformer un faisceau lumineux divergent issu de l'extrémité de la fibre optique 32 (dans l'autre extrémité de laquelle on injecte de la lumière issue d'une source telle qu'un laser de puissance), en un faisceau lumineux dont l'enveloppe a la forme d'un cylindre de révolution autour de l'axe optique de la lentille 36.

Le dispositif schématiquement représenté sur la figure 6 comprend également des lentilles 38, 40 et 42 qui sont montées dans cet ordre, dans le corps 22, à partir de l'extrémité de ce dernier dans laquelle est articulée la rotule 26.

On précise qu'on peut choisir la valeur de la distance focale de la lentille 36 en fonction de l'angle d'émergence du faisceau lumineux issu de la fibre optique et effectuer une translation du connecteur optique 30 suivant l'axe du manchon 24 pour placer l'extrémité de la fibre optique 32 à cette distance focale de la lentille 36. Une fois ce réglage réalisé, la lentille 38, qui suit la lentille 36, reçoit un faisceau lumineux dont les rayons sont parallèles et dont la section transversale est circulaire.

Les lentilles 38, 40 et 42 ont un axe optique commun qui porte la référence Z et qui constitue également l'axe du corps 22. On considère également un axe X qui est perpendiculaire à l'axe Z et coupe ce dernier en un point 0 ainsi qu'un axe Y qui passe par 0 et qui est perpendiculaire à X et à Z.

La lentille 38 est une lentille divergente, de longueur focale négative, prévue pour transformer le faisceau lumineux incident, de section transversale circulaire, en un faisceau lumineux divergent dont la section transversale est délimitée par une ellipse dont le grand axe est parallèle à l'axe Y et va en augmentant jusqu'à la lentille suivante qui porte la référence 40. En tant que lentille 38, on utilise une lentille cylindrique plan-concave dont les génératrices sont parallèles à l'axe X.

La lentille 40 est une lentille convergente, de longueur focale positive, prévue pour former, à partir du faisceau elliptique divergent qui arrive sur elle, un faisceau dont la section transversale est également délimitée par une ellipse de grand axe parallèle à Y mais dont les rayons sont parallèles les uns aux autres. En tant que lentille 40, on utilise une lentille cylindrique plan-convexe dont les génératrices sont également parallèles à l'axe X et dont le foyer F1 est confondu avec le foyer de la lentille 38.

La lentille 42, qui suit la lentille 40, est une lentille convergente classique, de type plan-convexe, prévue pour focaliser le faisceau lumineux incident dont la forme est elliptique et dont les rayons sont parallèles. On obtient ainsi une tache focale elliptique.

A titre purement indicatif et nullement limitatif, les longueurs focales des lentilles 36, 38, 40 et 42 sont respectivement égales à 25 millimètres, -20 millimètres, 60 millimètres et 100 millimètres et l'enveloppe du faisceau elliptique tombant sur la lentille 42 a, au niveau de celle-ci, un petit axe de 11 millimètres et un grand axe de 28 millimètres.

La rotule 26, qui est articulée dans l'extrémité correspondante du corps 22, permer de centrer le faisceau lumineux issu de la lentille 36 sur la lentille 38, notamment dans le cas d'un mauvais polissage de la face de sortie de la fibre 32, ce mauvais polissage étant susceptible de provoquer une déviation du faisceau issu de cette face de sortie.

Le dispositif schématiquement représenté sur la figure 6 comprend également une lame 44 qui est transparente au faisceau lumineux transmis par la fibre optique et les différentes lentilles. Cette lame 44 est montée dans le corps 22 perpendiculairement à l'axe Z, du côté de l'autre extrémité de ce corps 22 et à la suite de la lentille 42. La lame 44 a pour fonction de protéger la lentille 42 des projections qui sont susceptibles de se produire lors de l'utilisation du dispositif, par exemple lors du soudage d'une pièce mécanique.

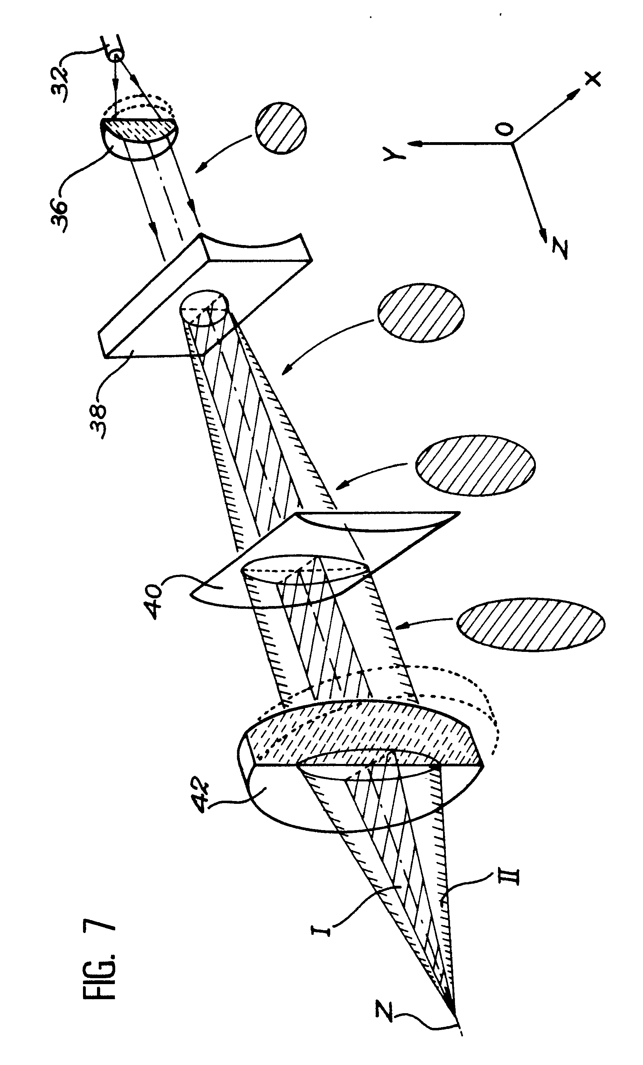

Sur la figure 7, la trace, dans le plan OZX, du faisceau lumineux qui se propage à travers le dispositif représenté sur la figure 6, est matérialisée et porte la référence I. La trace de ce faisceau lumineux dans le plan OZY est également matérialisée et porte la référence II. On voit également la section transversale de ce faisceau en divers points de l'axe Z.

Les cordons de soudure réalisés avec le dispositif représenté sur les figures 6 et 7 ont donné des résultats qui concordent avec l'approche théorique.

Pour l'exposé de ces résultats, on considère les nombres $m = b/a$ et $m' = b'/a'$, b et a étant les dimensions respectives du grand axe et du petit axe de l'ellipse qui délimite, au niveau de la lentille 42, l'enveloppe du faisceau lumineux qui tombe sur cette lentille 42 ; les quantités $b'$ et $a'$ sont, quant à elles, les dimensions respectives du grand axe et du petit axe de la zone fondue elliptique réalisée, à chaque impact, à la surface de la pièce à souder.

On a effectué deux essais correspondant respectivement à deux valeurs de m et, pour chaque essai, on a fait, d'une part, des mesures de surface sur une photographie de la surface de la pièce, et d'autre part, des mesures dans la matière de la pièce convenablement découpée comme on le verra plus loin.

Dans le premier essai, m est égal à 3 ($a = 11$ millimètres et $b = 33$ millimètres), ce rapport m étant obtenu avec les valeurs numériques données plus haut à titre purement indicatif et nullement limitatif pour les longueurs focales des lentilles 36, 38, 40 et 42.

Dans ce premier essai, l'énergie E de chaque impulsion lumineuse vaut 6,5 joules, la largeur temporelle de chacune de ces impulsions vaut 5 millisecondes et la fréquence de récurrence de ces impulsions vaut 4 Hz, la distance de tir étant égale à 100 millimètres.

Pour ce premier essai, les mesures de surface ont donné les valeurs $a' = 0,64$ millimètre et $b' = 1$ millimètre, d'où un rapport $m'$ égal à 1,56.

Ensuite, pour faire les mesures dans la matière de la pièce, au voisinage de la surface de celle-ci, la pièce a été découpée suivant deux axes perpendiculaires, respectivement parallèles au grand axe et au petit axe des zones fondues elliptiques. On a obtenu $a' = 0,64$ millimètre et $b' = 0,94$ millimètre, d'où un rapport $m'$ égal à 1,46.

Les mesures de surface et les mesures dans la matière de la pièce donnent donc sensiblement les mêmes résultats.

Dans le deuxième essai, m est égal à 5 ($a = 11$ millimètres et $b = 55$ millimètres), ce rapport m étant obtenu avec des lentilles 36, 38, 40 et 42 dont les longueurs focales sont respectivement égales à 25 millimètres, -60 millimètres, 300 millimètres et 150 millimètres.

Pour ce deuxième essai, l'énergie de chaque impulsion lumineuse, la durée de chacune de ces impulsions, la fréquence de récurrence de ces impulsions et la distance de tir sont respectivement égales à 10,5 Joules, 5 millisecondes, 4 Hz et 150 millimètres.

Les mesures de surface ont donné : $a' = 0,74$ millimètre et $b' = 1,52$ millimètres, d'où un rapport $m'$ égal à 2,05.

Les mesures correspondantes dans la matière de la pièce, au voisinage de la surface de celle-ci, ont donné : $a' = 0,7$ millimètre et $b' = 1,4$ millimètres, d'où un rapport $m'$ égal à 2 (pas d'avance : 0,45 mm et profondeur minimale de pénétration c'est-à-dire hauteur minimale de la zone fondue : 0,4 mm).

Par comparaison du dispositif conforme à l'invention, représenté sur les figures 6 et 7, avec un dispositif de soudage classique à deux lentilles (figure 2), on conclut que la focalisation elliptique permet, à longueurs de plans de joint à souder égales, de minimiser le nombre de points de soudure.

On a en effet établi, avec le deuxième essai, qu'il est possible de réaliser une soudure de pénétration 0,4 millimètre avec un pas d'avance, entre deux tirs, de 0,45 millimètre. Avec un dispositif classique engendrant typiquement, dans le cas d'une sous-focalisation, un point image de diamètre égal à 0,7 mm à la surface de la pièce, il faut un pas d'avance de 0,3 millimètre pour garantir la même pénétration minimale.

Il est donc clair que le dispositif conforme à l'invention permet, dans l'application au soudage, de diviser le nombre points de soudure à faire par 1,5. On peut également raisonner en termes de productivité et dire que le temps de soudage est divisé par 1,5 en travaillant à la même fréquence de tir (nombre d'impacts par seconde).

L'autre avantage de l'invention réside dans le fait qu'elle permet de minimiser les déformations des pièces.

Comme on le voit sur la figure 6, au lieu d'avoir une position fixe dans le corps 22, la lentille 40 est mobile en translation parallèlement à l'axe Z par rapport aux lentilles 38 et 42 qui, elles, gardent des positions fixes.

Pour réaliser ceci, on peut, comme on le voit sur la figure 6, monter la lentille 40 dans une bague filetée à sa périphérie, dont l'axe est l'axe Z et qui se trouve à l'intérieur du corps 22, ce corps 22 comportant une rainure 48 parallèle à l'axe Z et la bague 46 étant munie à sa périphérie d'une clavette 50 apte à coulisser dans la rainure 48.

On voit également sur la figure 6 un écrou 52 dont l'axe est l'axe Z et qui coopère avec la bague filetée 46 pour permettre la translation de cette bague 46 et donc de la lentille 40, parallèlement à l'axe Z, lorsqu'on tourne cet écrou 52, le système ainsi obtenu étant de type "vis-écrou".

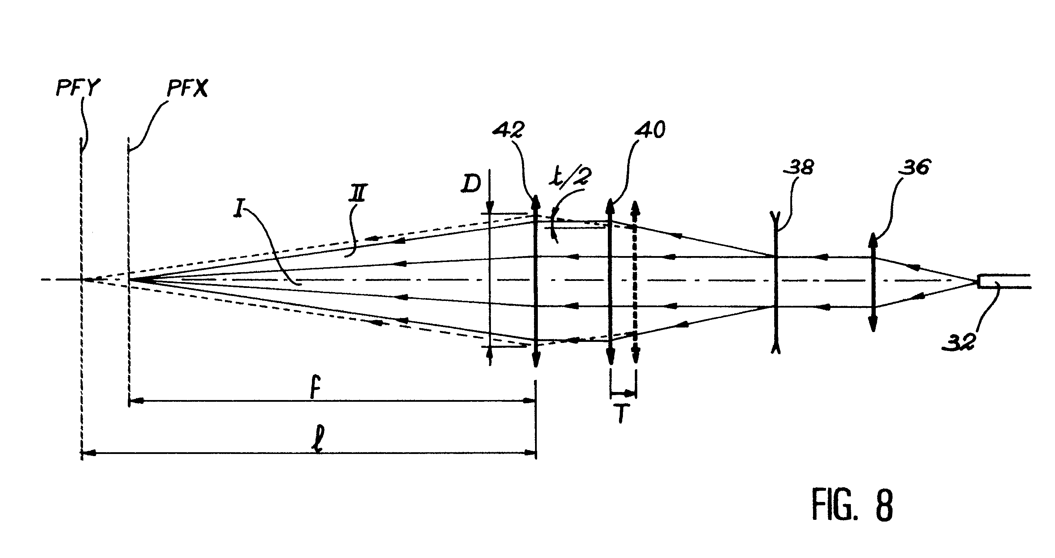

En diminuant la distance séparant la lentille 40 de la lentille 38, les foyers des lentilles 40 et 42, qui étaient confondus, ne le sont plus et les rayons constitutifs du faisceau lumineux compris entre les lentilles 40 et 42 ne sont plus parallèles (figure 8).

Plus précisément, les rayons situés dans le plan YOZ et dans les plans parallèles à ce dernier deviennent divergents alors que les rayons situés dans le plan XOZ restent parallèles.

Ceci fait que la lentille 42 focalise les rayons situés dans le plan XOZ, dans un voisinage du plan focal PFX de la lentille 42 et donc approximativement à la distance focale f de cette lentille 42.

Les rayons situés dans le plan YOZ et dans les plans parallèles à ce dernier sont, quant à eux, focalisés plus loin, dans le voisinage d'un autre plan PFY situé à une distance l de la lentille 42, l étant supérieur à f.

Sur la figure 8, on a fait apparaître la moitié t/2 de la divergence t (négative par convention) engendrée par une translation T de la lentille 40 vers la lentille 38, ainsi que les deux plans PFX et PFY.

La position de la lentille 40, avant son déplacement vers la lentille 38, est représentée en traits continus sur la figure 8.

La distance l est donnée par la formule suivante :

$$l = D.f/(D + (f.t))$$

où D est le grand axe de l'ellipse qui délimite le faisceau tombant sur la lentille 42, au niveau de cette lentille 42.

En plaçant la pièce à souder à la distance l, on engendre sur cette pièce une tache elliptique créée uniquement par les rayons divergents situés dans le plan YOZ et dans les plans parallèles à ce dernier. Ces rayons sont répartis dans un segment plus long que dans les configurations précédentes puisque l'on forme leur image plus loin de la lentille de focalisation 42.

Les rayons situés dans un voisinage du plan ZOX ne participent quasiment pas à la fusion du matériau de la pièce puisqu'ils arrivent de façon divergente à la surface de cette pièce.

En utilisant la même combinaison optique que pour le deuxième essai mentionné plus haut, avec T = 15 mm et en utilisant des impulsions lumineuses de 14 Joules, de durée 5 millisecondes et de fréquence de récurrence 4 Hz ainsi qu'une distance de tir de 158 millimètres, la quantité b définie plus haut n'est pas mesurable du fait de la divergence mais en faisant des mesures sur la pièce, on obtient $b' = 2$ millimètres et $a' = 0,8$ millimètres, d'où un rapport $m'$ égal à 2,5.

Le déplacement de la lentille 40 vers la lentille 38 permet donc d'obtenir un rapport $m'$ supérieur à ceux qui ont été mentionnés plus haut.

On explique ci-après que le faisceau elliptique, focalisé à partir de la lentille 42, diminue plus dans le plan YOZ qu'il ne diminue dans le plan XOZ de sorte que l'ellipse qui délimite la tache focale a un grand axe qui est parallèle à l'axe X et un petit axe qui est parallèle à l'axe Y, d'où une "rotation" apparente de 90° de l'ellipse, entre la lentille 42 et la tache focale.

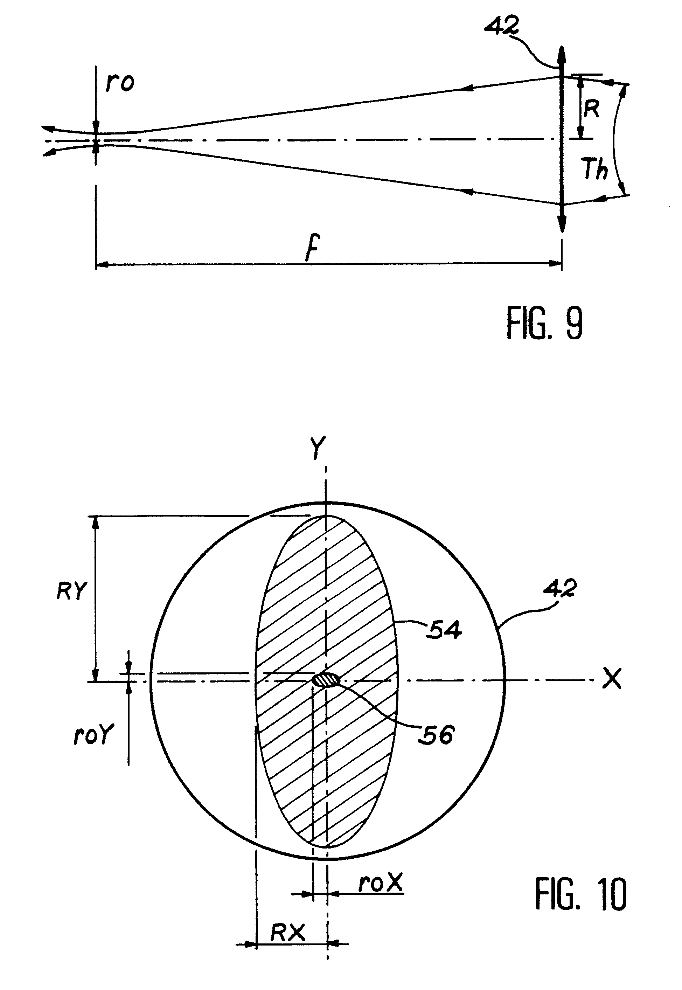

En effet, considérons (figure 9) un faisceau lumineux qui arrive sur la lentille convergente 42 de longueur focale positive f et dont l'enveloppe est un cylindre de révolution autour de l'axe Z, ce faisceau étant supposé, pour simplifier, de type gaussien et ayant une divergence théorique Th.

En notant R le rayon du faisceau incident et ro le rayon de la tache focale (dans le plan focal), on peut écrire :

$$Th = Q.L/(2.R)$$

où Q est un coefficient de proportionnalité qui est égal à 2/pi, pi étant le nombre bien connu qui vaut approximativement 3,1416, et L est la longueur d'onde de la lumière utilisée, qui vaut par exemple 1064 nanomètres.

On peut également écrire :

$$ro = L.f/(pi.R)$$

On voit donc que le rayon de la tache focale est inversement proportionnel au rayon du faisceau tombant sur la lentille 42.

On considère maintenant un faisceau lumineux d'enveloppe elliptique, qui arrive sur la lentille 42, comme on le voit sur la figure 10. Sur cette lentille 42, le faisceau incident est délimité par une ellipse 54 dont le grand axe est parallèle à l'axe Y et dont le petit axe est parallèle à l'axe X. La moitié de la longueur du grand axe est notée RY et la moitié de la longueur du petit axe est notée RX.

La tache focale est également délimitée par une ellipse 56 qui résulte de la transformation de l'ellipse 54.

Un axe de l'ellipse 56 est parallèle à l'axe Y et la moitié de sa longueur est notée roY. L'autre axe de l'ellipse 56 est parallèle à l'axe X et la moitié de sa longueur est notée roX.

La quantité RY est supérieure à la quantité RX et on peut écrire :

roY = f.L/(pi.RY)

roX = f.L/(pi.RX)

Il en résulte que roY est inférieur à roX.

On explique ainsi, en appliquant le même raisonnement à tous les rayons lumineux de l'ellipse 54, la "rotation" de 90° de l'image que constitue la tache focale.

Bien entendu, il convient de tenir compte de cette rotation lors du positionnement du dispositif objet de l'invention par rapport à une pièce que l'on veut traiter. Dans le cas d'un soudage par exemple, on oriente le dispositif de façon que le grand axe de l'ellipse du point-image sur la pièce soit superposé avec le plan de joint à souder, ce qui est possible en faisant tourner le dispositif autour de son axe Z.

Si l'on dispose d'un faisceau lumineux dont l'enveloppe est en forme de cylindre de révolution et que l'on peut produire par exemple avec un laser de faible puissance tel qu'un laser He-Ne, ce faisceau peut être envoyé directement sur la lentille 38 suivant l'axe Z. Alors, on obtient encore un dispositif conforme à l'invention en supprimant, dans le dispositif de la figure 6, le manchon 24, la lentille 36, le connecteur 30 et sa fibre optique 32.

On obtient encore un nouveau dispositif conforme à l'invention en ajoutant au dispositif ainsi obtenu, à trois lentilles 38, 40 et 42, une lentille auxiliaire qui est du genre de la lentille 36, dont l'axe optique est l'axe Z et que l'on place avant la lentille 38. Ce nouveau dispositif est utilisable avec une source lumineuse apte à produire un faisceau lumineux de divergence non négligeable que l'on envoie sur la lentille auxiliaire suivant l'axe Z, en plaçant la source de telle façon que le point de divergence du faisceau (sommet du cône de divergence) soit placé au foyer de la lentille auxiliaire, le faisceau produit par la source étant ainsi transformé en un faisceau d'enveloppe cylindrique par la lentille auxiliaire et arrivant ensuite sur la lentille 38.

Cependant, avec un laser de puissance, qui émet un faisceau dont la divergence varie avec la puissance moyenne de ce laser, il est préférable d'utiliser le dispositif à fibre optique de la figure 6. En effet, sans fibre optique et dans le cas d'un soudage par exemple, la divergence du faisceau sortant du laser, et donc la distance de tir, varient avec la puissance moyenne du laser.

Au contraire, avec un dispositif à fibre optique du genre de celui de la figure 6, la fibre optique, à une extrémité de laquelle on injecte la lumière du laser de puissance, atténue très fortement les variations de la divergence à l'autre extrémité de la fibre optique qui fait face à la lentille 36, de sorte que cette dernière divergence est sensiblement constante au cours du temps et que la distance de tir l'est donc aussi.

Par ailleurs, la fibre utilisée avec un laser de puissance étant une fibre multimode, tous les moyens optiques en aval de celle-ci ont pour but de traiter l'image de la face optique de sortie de la fibre, cette surface, qui est bien sûr un cercle, étant considérée comme une "surface émissive". Cette considération permet de parler d'enveloppe délimitant la propagation des rayons lumineux de la même manière que l'on parle d'un cercle délimitant le coeur de la fibre.

On notera que, dans la présente invention, les premiers moyens optiques - les lentilles 38 et 40 munies des moyens 46, 48, 50 et 52 dans l'exemple donné - permettent le réglage de la forme de l'enveloppe du faisceau qui en est issu, et que les deuxièmes moyens optiques - la lentille 42 dans l'exemple donné -réalisent, sur la pièce à traiter, une homothétie de l'enveloppe réglée par les premiers moyens, dont le rapport est lié à la valeur de leur distance focale et à leur nature, et conduisent à une tache focale dont on peut choisir la taille (en choisissant des deuxièmes moyens optiques appropriés) et ce, sans modifier le réglage des premiers moyens optiques.

## Revendications

1. Dispositif de focalisation d'un faisceau lumineux, caractérisé en ce qu'il comprend des premiers moyens optiques (38, 40) qui sont aptes, d'une part, à déformer un faisceau lumineux incident, dont l'enveloppe est sensiblement cylindrique de révolution, de telle façon que le faisceau déformé ait, dans un plan qui lui est perpendiculaire, une section transversale allongée suivant une direction, et, d'autre part, à faire varier la forme de l'enveloppe du faisceau déformé, et des deuxièmes moyens optiques (42) qui suivent les premiers moyens optiques (38, 40) et qui sont aptes à focaliser le faisceau lumineux déformé par ceux-ci tout en réalisant une homothétie de ce faisceau déformé, la tache focale obtenue par l'intermédiaire des deuxièmes moyens optiques (42) étant ainsi homothétique de la section transversale de l'enveloppe du faisceau déformé tombant sur les deuxièmes moyens optiques.

2. Dispositif selon la revendication 1, caractérisé en ce que les premiers moyens optiques (38, 40) sont aptes à déformer le faisceau lumineux incident de telle façon que le faisceau déformé ait, dans un plan qui lui est perpendiculaire, une section transversale sensiblement elliptique.

3. Dispositif selon la revendication 2, caractérisé en ce que les premiers moyens optiques (38, 40) comprennent :

- une lentille cylindrique plan-concave (38) qui est prévue pour allonger le faisceau lumineux incident suivant une direction perpendiculaire aux génératrices de cette lentille cylindrique plan-concave (38), et

- une lentille cylindrique plan-convexe (40) dont les génératrices sont parallèles aux génératrices de la lentille cylindrique plan-concave (38), qui est placée entre cette dernière et les deuxièmes moyens optiques (42) de façon que les deux lentilles (38, 40) aient un foyer commun (F1), et qui est prévue pour transformer le faisceau lumineux qui lui parvient en un faisceau dont les rayons lumineux sont sensiblement parallèles,

et en ce que le dispositif comprend en outre des moyens (46, 48, 50, 52) aptes à faire varier la distance de la lentille cylindrique plan-convexe (40) à la lentille cylindrique plan-concave (38).

4. Dispositif selon l'une quelconque des revendications 1 à 3, caractérisé en ce qu'il comprend en outre des troisièmes moyens optiques (36) qui précédent les premiers moyens optiques (38, 40) et qui sont aptes à former le faisceau lumineux dont l'enveloppe est sensiblement cylindrique de révolution, à partir d'un faisceau lumineux incident, divergent.

5. Dispositif selon la revendication 4, caractérisé en ce qu'il comprend en outre un guide de lumière (32) dont une extrémité est placée en regard des troisièmes moyens optiques (36) et prévue pour envoyer un faisceau lumineux divergent vers ces troisièmes moyens optiques (36) lorsqu'un faisceau lumineux est injecté dans l'autre extrémité du guide de lumière (32).

6. Dispositif selon la revendication 5, caractérisé en ce qu'il comprend en outre des moyens (24) de réglage de la position de l'extrémité du guide de lumière (32) par rapport aux troisièmes moyens optiques (36).

7. Dispositif selon la revendication 6, caractérisé en ce qu'il comprend en outre des moyens (26) de réglage angulaire de l'ensemble formé par cette extrémité du guide de lumière (32) et les troisièmes moyens optiques (36), par rapport aux premiers moyens optiques.

8. Dispositif selon l'une quelconque des revendications 4 à 7, caractérisé en ce que le faisceau lumineux injecté dans l'autre extrémité du guide de lumière (32) est un faisceau issu d'un laser de puissance.

9. Dispositif selon la revendication 8, caractérisé en ce que le laser de puissance a une fréquence de tir élevée ou est un laser de puissance à émission continue.

FIG. 1

FIG. 2

FIG. 3

FIG. 4

FIG. 5

FIG. 6

EP 0 429 368 A1

# FIG. 7

EP 0 429 368 A1

FIG. 8

FIG. 9

FIG. 10

**Office européen des brevets**

# RAPPORT DE RECHERCHE EUROPEENNE

Numéro de la demande

**EP 90 40 3306**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-1 565 144 (TELEFUNKEN PATENTVERWERTUNG) * Pages 3,4; figures 1a,1b * | 1,8,9 | B 23 K 26/06 G 02 B 27/00 |
| | — — — | | |
| A | PATENT ABSTRACTS OF JAPAN, vol. 8, no. 26 (M-273)[1463], 3 février 1984; & JP-A-58 184 079 (TOKYO SHIBAURA DENKI K.K.) 27-10-1983 * En entier * | 1,2 | |
| | — — — | | |
| A | IBM TECHNICAL DISCLOSURE BULLETIN, vol. 14, no. 9, février 1972, pages 2641-2642, New York, US; M.A. GRIMM: "Optical system for laser machining of narrow slots" * En entier * | 1,4 | |
| | — — — | | |
| A | JOURNAL OF ELECTRONIC ENGINEERING, vol. 23, no. 240, décembre 1986, pages 57-61, Tokyo, JP; T. HARADA: "Precision machining technology by YAG laser using a fiber-optic system" * Paragraphe: "Optical characteristics"; paragraphe: "Incident optics"; figures 1,5,6 * | 5,6 | |
| | — — — — — | | |

DOMAINES TECHNIQUES RECHERCHES (Int. Cl.5)

B 23 K
G 02 B

Le présent rapport de recherche a été établi pour toutes les revendications

| Lieu de la recherche | Date d'achèvement de la recherche | Examinateur |
|---|---|---|
| La Haye | 30 janvier 91 | MALIC K. |